# EUROPEAN PATENT APPLICATION

(11) **EP 3 020 945 A1**
(43) Date of publication of application: **18.05.2016**
(21) Application number: 13889193.2
(22) Date of filing: 08.07.2013
(51) Int. Cl.: F02D 17/00, F01N 3/023, F02D 17/04

(54) **CONTROL METHOD FOR INTERNAL COMBUSTION ENGINE**

(71) Applicant: TOYOTA JIDOSHA KABUSHIKI KAISHA, Toyota-shi, Aichi-ken 471-8571 (JP)
(72) Inventor: TSUNOOKA, Takashi, Toyota-shi Aichi 471-8571 (JP); OTSUKA, Takayuki, Toyota-shi Aichi 471-8571 (JP); KOBASHI, Noriyasu, Toyota-shi Aichi 471-8571 (JP)
(74) Representative: Intès, Didier Gérard André
(86) International application number: PCT/JP2013/068659
(87) International publication number: WO 2015/004713

(57) **Abstract**

A control method for an internal combustion engine having a plurality of cylinders and a filter provided in an exhaust passage of the internal combustion engine in order to collect particulate matter. The control method includes a partial cylinder stoppage step, in which a supply of fuel is stopped in a part of a plurality of cylinders while continuing to supply fuel to the other cylinders such that combustion is performed therein, is implemented after a request to stop an internal combustion engine is issued but before the internal combustion engine is stopped, and after the partial cylinder stoppage step, an all cylinder stoppage step is implemented to stop the internal combustion engine by stopping the supply of fuel in all of the cylinders.

## Description

### [TECHNICAL FIELD]

The present invention relates to a control method for an internal combustion engine.

### [BACKGROUND ART]

A filter that collects particulate matter (referred to hereafter as PM) contained in an exhaust gas may be provided in an exhaust passage of an internal combustion engine. When an amount of PM collected in the filter reaches a fixed amount, processing is implemented to oxidize, and thereby remove, the PM. This processing is known as filter regeneration.

In a conventional technique employed in a diesel engine, when a vehicle is stopped while filter regeneration is underway and a temperature of the filter equals or exceeds a predetermined temperature, the filter is regenerated by increasing an engine rotation speed to a predetermined rotation speed. In another conventional technique, when a request to stop the internal combustion engine is issued while filter regeneration is underway, filter regeneration is continued by prohibiting stoppage of the engine until the temperature of the filter falls to or below the predetermined temperature (see Patent Document 1, for example). The predetermined temperature is a temperature at which the PM is oxidized.

Note that in order to oxidize the PM collected in the filter, the temperature of the filter must have reached the predetermined temperature and oxygen must exist in the filter. In a diesel engine, operations are performed at a lean air-fuel ratio, and therefore an oxygen concentration in the filter is comparatively high. Hence, by increasing the rotation speed, a larger amount of oxygen can be supplied to the filter.

In a gasoline engine, on the other hand, operations are typically performed at the stoichiometric air-fuel ratio or a rich air-fuel ratio, and therefore the oxygen concentration in the filter is low. Oxygen is supplied to the filter only when an operation is performed at a lean air-fuel ratio, when a fuel cut is performed during deceleration or the like, and so on. Hence, in a gasoline engine that is operated at the stoichiometric air-fuel ratio or a rich air-fuel ratio, it is difficult to regenerate the filter simply by increasing the engine rotation speed, even when the temperature of the filter equals or exceeds the predetermined temperature.

Further, when the internal combustion engine is operated at a lean air-fuel ratio, an amount of NO_{X} discharged from the internal combustion engine is greater than when the internal combustion engine is operated at the stoichiometric air-fuel ratio or a rich air-fuel ratio. Moreover, at a lean air-fuel ratio, it is difficult to purify the NO_{X} using a three-way catalyst provided on an upstream side of the filter, for example. Hence, when filter regeneration is implemented while operating the internal combustion engine at a lean air-fuel ratio, the amount of discharged NO_{X} may increase.

### [PRIOR ART REFERENCES]

### [PATENT LITERATURES]

Patent Document 1: Japanese Patent Application Publication No. 2005-83306

### [SUMMARY OF THE INVENTION]

### [PROBLEMS TO BE SOLVED BY THE INVENTION]

The present invention has been designed in consideration of the problems described above, and an object thereof is to increase opportunities for performing filter regeneration while reducing an amount of discharged NO_{X}.

### [MEANS FOR SOLVING THE PROBLEMS]

To achieve the object described above, the present invention is a control method for an internal combustion engine having a plurality of cylinders and a filter provided in an exhaust passage of the internal combustion engine in order to collect particulate matter, the control method including:
a partial cylinder stoppage step of stopping a supply of fuel in a part of the cylinders while continuing to supply fuel to other cylinders such that combustion is performed therein, after a request to stop the internal combustion engine is issued but before the internal combustion engine is stopped; and
an all cylinder stoppage step of stopping the internal combustion engine by stopping the supply of fuel in all of the cylinders following the partial cylinder stoppage step.

Torque for operating the internal combustion engine is generated in the other cylinders that continue to receive a supply of fuel such that combustion is performed therein. Hence, the internal combustion engine remains operative even when the fuel supply is stopped in the part of the cylinders, and as a result, a piston provided in each of the part of the cylinders continues to move. Since combustion is not performed in the part of the cylinders, air taken in by these cylinders is discharged as is. In other words, oxygen is discharged from the part of the cylinders. By supplying this oxygen to the filter, the particulate matter collected in the filter can be oxidized. In other words, the filter is regenerated before the internal combustion engine stops. At this time, no fuel is burned in the part of the cylinders, and therefore no NO_{X} is generated in the part of the cylinders. By stopping the fuel supply in the part of the cylinders, therefore, an amount of discharged NO_{X} can be reduced in comparison with a case where fuel is supplied to all of the cylinders. In other words, filter regeneration can be implemented while reducing the amount of discharged NO_{X}. Note that as long as spark ignition is performed in at least the other cylinders that continue to receive a supply of fuel such that combustion is performed therein, spark ignition does not have to be performed in the part of the cylinders in which the fuel supply is stopped.

Further, in the other cylinders, combustion may be performed in the vicinity of a stoichiometric air-fuel ratio. By performing combustion in the vicinity of the stoichiometric air-fuel ratio in the other cylinders that continue to receive a supply of fuel such that combustion is performed therein, NO_{X} generation in the other cylinders can be suppressed. In other words, the amount of NO_{X} discharged during filter regeneration can be reduced. In this case, the exhaust gas discharged from the other cylinders in which combustion is performed contains substantially no oxygen, but since oxygen is discharged from the part of the cylinders, the filter can be regenerated.

In the present invention, the partial cylinder stoppage step may be implemented when a temperature of the filter equals or exceeds a predetermined lower limit temperature.

Here, a situation in which substantially none of the particulate matter is oxidized even after oxygen is supplied to the filter may occur when the temperature of the filter is low. In other words, when the temperature of the filter is so low that the particulate matter cannot easily be oxidized, the filter is not regenerated even after the fuel supply is stopped in the part of the cylinders. Hence, when the operation of the internal combustion engine is continued by supplying fuel to the other cylinders, fuel is consumed wastefully. By stopping the internal combustion engine without supplying fuel to the other cylinders in such a case, the amount of consumed fuel can be reduced. By stopping the fuel supply in the part of the cylinders when the temperature of the filter equals or exceeds the predetermined lower limit temperature, on the other hand, the filter can be regenerated without wasting fuel.

Note that the predetermined lower limit temperature may be set at a lower limit value of a temperature at which the particulate matter is oxidized. Further, the predetermined lower limit temperature may be set at a value having a certain amount of leeway relative to the lower limit value of the temperature at which the particulate matter is oxidized. In other words, the predetermined lower limit temperature may be set higher than the lower limit value of the temperature at which the particulate matter is oxidized. Furthermore, the predetermined lower limit temperature may be varied in accordance with an amount of supplied oxygen, for example.

In the present invention, the partial cylinder stoppage step may be implemented when a temperature of the filter is equal to or lower than a predetermined upper limit temperature.

Here, when filter regeneration is implemented, the temperature of the filter increases due to reaction heat from the particulate matter. Hence, when filter regeneration is implemented while the temperature of the filter is high, the filter may overheat. As long as the temperature of the filter is equal to or lower than the predetermined upper limit temperature, however, overheating of the filter can be suppressed even when the filter is regenerated by stopping the fuel supply in the part of the cylinders.

Note that the predetermined upper limit temperature may be set at a larger value than the predetermined lower limit temperature. Further, the predetermined upper limit temperature may be set at an upper limit value of a temperature at which the filter does not overheat even when regeneration is implemented thereon. Alternatively, the predetermined upper limit temperature may be set at or below a value obtained by subtracting a temperature increase occurring in the filter during regeneration from a heat resistant temperature of the filter. Furthermore, the predetermined upper limit temperature may be set at a value having a certain amount of leeway relative to the temperature increase occurring in the filter during regeneration. Moreover, the predetermined upper limit temperature may be varied in accordance with the amount of supplied oxygen, for example.

In the present invention, the partial cylinder stoppage step may be implemented when an amount of particulate matter collected in the filter equals or exceeds a predetermined lower limit amount.

Here, when the amount of particulate matter collected in the filter is small, a blockage is unlikely to occur in the filter, and it may therefore be unnecessary to regenerate the filter. When the fuel supply is stopped in the part of the cylinders while continuing to supply fuel to the other cylinders in such a case, fuel is consumed wastefully. By stopping the fuel supply in the part of the cylinders when the amount of particulate matter collected in the filter equals or exceeds the predetermined lower limit amount, on the other hand, the amount of consumed fuel can be reduced.

Note that the predetermined lower limit amount may be set at a lower limit value of an amount of particulate matter at which regeneration of the filter becomes necessary.

In the present invention, the partial cylinder stoppage step may be implemented when an amount of particulate matter collected in the filter is equal to or smaller than a predetermined upper limit amount.

Here, when filter regeneration is implemented, the temperature of the filter increases due to reaction heat from the particulate matter. Hence, when filter regeneration is implemented while the amount of particulate matter collected in the filter is large, the filter may overheat. As long as the amount of particulate matter collected in the filter is equal to or smaller than the predetermined upper limit amount, however, overheating of the filter can be suppressed even when the filter is regenerated by stopping the fuel supply in the part of the cylinders.

Note that the predetermined upper limit amount may take a larger value than the predetermined lower limit amount. Further, the predetermined upper limit amount may be set at an upper limit value of an amount of particulate matter at which the filter does not overheat even when regeneration is implemented thereon, for example. Alternatively, the predetermined upper limit amount may be set at or below a value obtained by subtracting the temperature increase occurring in the filter during regeneration from the heat resistant temperature of the filter. Furthermore, the predetermined upper limit amount may be set at a value having a certain amount of leeway relative to the temperature increase occurring in the filter during regeneration. Moreover, the predetermined upper limit amount may be varied in accordance with the amount of supplied oxygen, for example.

In the present invention, the partial cylinder stoppage step may be implemented when the request to stop the internal combustion engine is issued following the elapse of a predetermined operation time from a point at which gas having a higher air-fuel ratio than a stoichiometric air-fuel ratio was most recently discharged from the internal combustion engine.

Here, the filter is regenerated when gas having a lean air-fuel ratio is discharged from the internal combustion engine before the request to stop the internal combustion engine is issued. In this case, there is no need to stop the fuel supply in the part of the cylinders after the request to stop the internal combustion engine is issued. When the fuel supply is stopped in the part of the cylinders while continuing to supply fuel to the other cylinders in such a case, fuel is consumed wastefully. When, on the other hand, the internal combustion engine is operated for a long time after exhaust gas having a lean air-fuel ratio is discharged from the internal combustion engine such that the filter is regenerated, new particulate matter is collected in the filter. Hence, by stopping the fuel supply in the part of the cylinders only when the request to stop the internal combustion engine is issued following the elapse of the predetermined operation time from the point at which gas having a higher air-fuel ratio than the stoichiometric air-fuel ratio was most recently discharged from the internal combustion engine, the amount of consumed fuel can be reduced.

Note that the predetermined operation time may be set at a time extending from a point at which gas having a higher air-fuel ratio than the stoichiometric air-fuel ratio is discharged from the internal combustion engine to a point at which the amount of particulate matter collected in the filter reaches the amount at which regeneration of the filter becomes necessary.

In the partial cylinder stoppage step according to the present invention, the number of cylinders in which the supply of fuel is to be stopped may be determined on the basis of at least one of a temperature of the filter and an amount of particulate matter collected in the filter.

Here, when the fuel supply is stopped in the part of the cylinders, a larger amount of oxygen can be supplied to the filter by increasing the number of cylinders in which the fuel supply is stopped. Further, the amount of oxygen to be supplied to the filter varies in accordance with the temperature of the filter or the amount of particulate matter collected in the filter. Hence, by determining the number of cylinders in which the fuel supply is to be stopped on the basis of at least one of the temperature of the filter and the amount of particulate matter collected in the filter, the filter can be regenerated more appropriately.

Note that in the partial cylinder stoppage step, the number of cylinders in which the supply of fuel is to be stopped may be increased as the temperature of the filter decreases.

When the temperature of the filter is low, an amount of leeway remaining until the filter overheats is large, and therefore regeneration of the filter can be completed more quickly by supplying a larger amount of oxygen. Further, when the temperature of the filter is high, overheating of the filter can be suppressed by reducing the amount of supplied oxygen.

Furthermore, in the partial cylinder stoppage step, the number of cylinders in which the supply of fuel is to be stopped may be increased as the amount of particulate matter collected in the filter increases.

When the amount of particulate matter collected in the filter is large, the amount of leeway remaining until the filter becomes blocked is small. In this case, it is desirable to reduce the amount of particulate matter collected in the filter quickly. By supplying a larger amount of oxygen, the amount of particulate matter collected in the filter can be reduced quickly. Further, when the amount of particulate matter collected in the filter is small, the amount of oxygen required to regenerate the filter is also small, and therefore only a small amount of oxygen need be supplied. Here, when the fuel supply is stopped in the part of the cylinders, torque variation and vibration may occur. By reducing the number of cylinders in which the fuel supply is stopped in response, the amount of oxygen supplied to the filter decreases, but torque variation and vibration can be suppressed.

In the partial cylinder stoppage step according to the present invention, the supply of fuel may be stopped in a plurality of cylinders arranged consecutively in a firing order when a temperature of the filter is equal to or lower than a predetermined temperature.

Here, when the fuel supply is stopped in a plurality of cylinders arranged consecutively in the firing order, oxygen is supplied to the filter continuously, and therefore oxidation of the particulate matter can be promoted. When oxidation of the particulate matter is promoted while the temperature of the filter is high, however, the filter may overheat. Nevertheless, as long as the temperature of the filter is equal to or lower than the predetermined temperature, breakage of the filter due to overheating of the filter can be suppressed even when the filter is regenerated by stopping the fuel supply in a plurality of cylinders arranged consecutively in the firing order.

Note that the predetermined temperature may be set at an upper limit value of a temperature at which the filter does not overheat even when the fuel supply is stopped in a plurality of cylinders arranged consecutively in the firing order. Alternatively, the predetermined temperature may be set at or below a value obtained by subtracting the temperature increase that occurs in the filter during regeneration from the heat resistant temperature of the filter. Further, the predetermined temperature may be set at a value having a certain amount of leeway relative to the temperature increase occurring in the filter during regeneration.

In the partial cylinder stoppage step according to the present invention, the supply of fuel may be stopped in a plurality of cylinders arranged non-consecutively in a firing order when a temperature of the filter equals or exceeds a predetermined temperature.

Here, when the fuel supply is stopped in a plurality of cylinders arranged non-consecutively in the firing order, oxygen is supplied continuously to the filter for a shorter period, and as a result, oxidation of the particulate matter slows. When the temperature of the filter is high, the filter may overheat, and therefore, by slowing oxidation of the particulate matter, overheating of the filter can be suppressed.

Note that the predetermined temperature may be set at a lower limit value of a temperature at which the filter overheats when the fuel supply is stopped in a plurality of cylinders arranged consecutively in the firing order. Alternatively, the predetermined temperature may be set at or below a value obtained by subtracting the temperature increase that occurs in the filter during regeneration from the heat resistant temperature of the filter. Furthermore, the predetermined temperature may be set at a value having a certain amount of leeway relative to the temperature increase occurring in the filter during regeneration.

In the partial cylinder stoppage step according to the present invention, the supply of fuel may be stopped in a plurality of cylinders arranged consecutively in a firing order when an amount of particulate matter collected in the filter equals or exceeds a predetermined amount.

Here, when the amount of particulate matter collected in the filter is large, the amount of leeway remaining until the filter becomes blocked is small. Hence, by stopping the fuel supply in a plurality of cylinders arranged consecutively in the firing order in order to promote oxidation of the particulate matter when the amount of particulate matter collected in the filter equals or exceeds the predetermined amount, blockage of the filter can be suppressed.

Note that the predetermined amount may be set at an amount of particulate matter at which it is desirable to regenerate the filter early. Alternatively, the predetermined amount may be set at a lower limit value of an amount of particulate matter at which the filter becomes blocked unless the fuel supply is stopped in a plurality of cylinders arranged consecutively in the firing order. Further, the predetermined amount may be set at a value having a certain amount of leeway relative to the amount of particulate matter at which the filter becomes blocked unless the fuel supply is stopped in a plurality of cylinders arranged consecutively in the firing order. The predetermined amount may also be set at an amount of particulate matter at which the amount of particulate matter collected in the filter exceeds an allowable range unless the fuel supply is stopped in a plurality of cylinders arranged consecutively in the firing order.

In the partial cylinder stoppage step according to the present invention, the supply of fuel may be stopped in a plurality of cylinders arranged non-consecutively in a firing order when an amount of particulate matter collected in the filter is equal to or smaller than a predetermined amount.

Here, when the amount of particulate matter collected in the filter is small, the amount of leeway remaining until the filter becomes blocked is large. In this case, oxidation of the particulate matter may be slowed. Hence, when the amount of particulate matter collected in the filter is equal to or smaller than the predetermined amount, the fuel supply may be stopped in a plurality of cylinders arranged non-consecutively in the firing order, and in so doing, torque variation and vibration can be suppressed.

Note that the predetermined amount may be set at an amount of particulate matter at which no problems arise even when the filter is not regenerated early. Alternatively, the predetermined amount may be set at an upper limit value of an amount of particulate matter at which the filter does not become blocked even when the fuel supply is stopped in a plurality of cylinders arranged non-consecutively in the firing order. Furthermore, the predetermined amount may be set at a value having a certain amount of leeway relative to the amount of particulate matter at which the filter does not become blocked even when the fuel supply is stopped in a plurality of cylinders arranged non-consecutively in the firing order. The predetermined amount may also be set at an amount of particulate matter at which the amount of particulate matter collected in the filter does not exceed the allowable range even when the fuel supply is stopped in a plurality of cylinders arranged non-consecutively in the firing order.

In the present invention, an exhaust gas purification catalyst that is capable of storing oxygen and is provided upstream of the filter, and a detection apparatus that detects an air-fuel ratio of exhaust gas downstream of the exhaust gas purification catalyst and upstream of the filter, may be provided in the exhaust passage of the internal combustion engine, and
the partial cylinder stoppage step may be continued until a predetermined period elapses following a point at which the air-fuel ratio of the exhaust gas, detected by the detection apparatus, increases beyond the stoichiometric air-fuel ratio.

Here, when a catalyst that is capable of storing oxygen is provided upstream of the filter and oxygen is discharged from the internal combustion engine, the oxygen is stored by the catalyst. After sufficient oxygen has been stored by the catalyst, the oxygen flows out of the catalyst. Therefore, regeneration of the filter does not always start as soon as oxygen is discharged from the internal combustion engine. Assuming that regeneration of the filter starts from a point at which oxygen flows out of the catalyst, regeneration of the filter can be completed by stopping the fuel supply in the part of the cylinders until the predetermined period elapses following this point.

Note that the predetermined period may be set at a period required to regenerate the filter. Further, the predetermined period may be set at a period required to supply enough oxygen to regenerate the filter to the filter.

According to the present invention, opportunities for performing filter regeneration can be increased while reducing the amount of discharged NO_{X}.

### [BRIEF DESCRIPTION OF THE DRAWINGS]

Fig. 1 is a schematic view showing a configuration of an internal combustion engine according to an embodiment, together with an intake system and an exhaust system thereof.
Fig. 2 is a flowchart showing a control flow of an internal combustion engine according to a first embodiment.
Fig. 3 is a flowchart showing a control flow of an internal combustion engine according to a second embodiment.
Fig. 4 is a flowchart showing a control flow of an internal combustion engine according to a third embodiment.
Fig. 5 is a flowchart showing a control flow of an internal combustion engine according to a fourth embodiment.
Fig. 6 is a flowchart showing a control flow of an internal combustion engine according to a fifth embodiment.
Fig. 7 is a flowchart showing a control flow of an internal combustion engine according to a sixth embodiment.
Fig. 8 is a flowchart showing a control flow of an internal combustion engine according to a seventh embodiment.
Fig. 9 is a flowchart showing a control flow of an internal combustion engine according to an eighth embodiment.
Fig. 10 is a flowchart showing a control flow of an internal combustion engine according to a ninth embodiment.
Fig. 11 is a flowchart showing a control flow of an internal combustion engine according to a tenth embodiment.
Fig. 12 is a flowchart showing a control flow of an internal combustion engine according to an eleventh embodiment.
Fig. 13 is a flowchart showing a control flow of an internal combustion engine according to a twelfth embodiment.
Fig. 14 is a time chart showing transitions of various values according to a thirteenth embodiment.
Fig. 15 is a flowchart showing a control flow of an internal combustion engine according to the thirteenth embodiment.
Fig. 16 is a flowchart showing a control flow of an internal combustion engine according to a fourteenth embodiment.

### [MODES FOR CARRYING OUT THE INVENTION]

Exemplary embodiments of the present invention will be described in detail below with reference to the drawings. Note, however, that unless specified otherwise, the scope of the invention is not limited to dimensions, materials, shapes, relative arrangements, and so on of constituent components described in the embodiments.

### (First Embodiment)

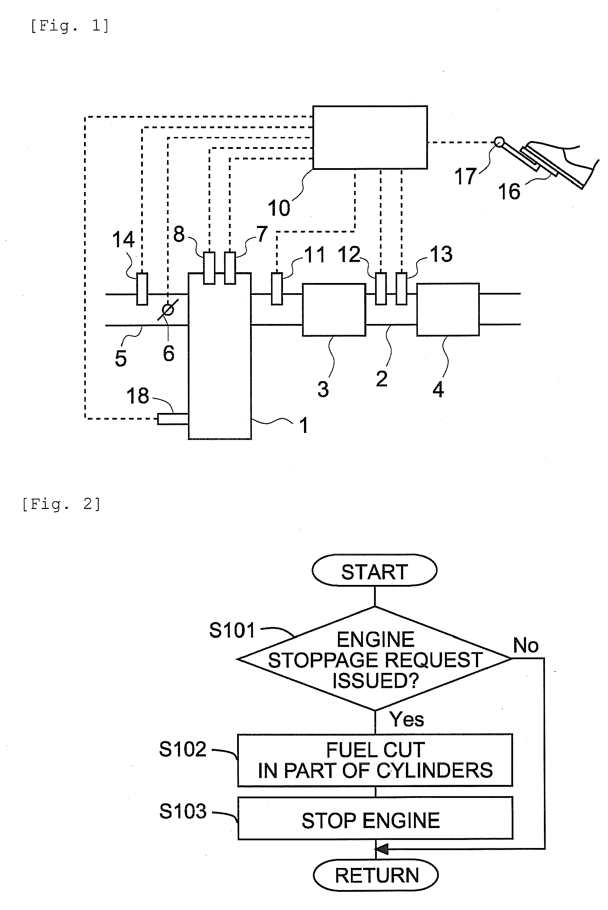

Fig. 1 is a schematic view showing a configuration of an internal combustion engine according to an embodiment, together with an intake system and an exhaust system thereof. An internal combustion engine 1 shown in Fig. 1 is a spark ignition type gasoline engine. The internal combustion engine 1 is installed in a vehicle, for example. Further, the internal combustion engine 1 includes a plurality of cylinders.

An exhaust passage 2 is connected to the internal combustion engine 1. A catalyst 3 and a filter 4 that collects PM contained in exhaust gas are provided midway in the exhaust passage 2 in that order from an upstream side.

The catalyst 3 purifies the exhaust gas. The catalyst 3 may be a three-way catalyst, an oxidation catalyst, a NO_{X} storage reduction catalyst, or a NO_{X} selective reduction catalyst, for example. Note that in this embodiment, the catalyst 3 is not essential.

Further, a first temperature sensor 11 that detects a temperature of the exhaust gas is provided in the exhaust passage 2 upstream of the catalyst 3. Furthermore, a second temperature sensor 12 that detects the temperature of the exhaust gas is provided in the exhaust passage 2 downstream of the catalyst 3 and upstream of the filter 4. A temperature of the catalyst 3 can be detected on the basis of a detection value from the first temperature sensor 11. A temperature of the filter 4 can be detected on the basis of a detection value from the second temperature sensor 12. Note that the temperatures of the catalyst 3 and the filter 4 may be estimated on the basis of operating conditions of the internal combustion engine 1. Furthermore, an air-fuel ratio sensor 13 that detects an air-fuel ratio of the exhaust gas is provided in the exhaust passage 2 downstream of the catalyst 3 and upstream of the filter 4. Note that an oxygen concentration sensor that detects an oxygen concentration of the exhaust gas may be provided instead of the air-fuel ratio sensor 13.

An intake passage 5 is also connected to the internal combustion engine 1. A throttle 6 that adjusts an intake air amount of the internal combustion engine 1 is provided midway in the intake passage 5. Further, an air flow meter 14 that detects the intake air amount of the internal combustion engine 1 is attached to the intake passage 5 upstream of the throttle 6.

Furthermore, a fuel injection valve 7 for supplying fuel is attached to each cylinder of the internal combustion engine 1. Note that the fuel injection valve 7 may inject fuel into the cylinder of the internal combustion engine 1, or may inject fuel into the intake passage 5. Moreover, a spark plug 8 is provided in the internal combustion engine 1 to generate an electric spark in the cylinder.

An ECU 10 is annexed to the internal combustion engine 1, configured as described above, as an electronic control unit for controlling the internal combustion engine 1. The ECU 10 controls the internal combustion engine 1 in accordance with the operating conditions of the internal combustion engine 1 and requests from a driver.

Further, an accelerator opening sensor 17 that detects an engine load by outputting an electric signal corresponding to an amount by which the driver depresses an accelerator pedal 16, and a crank position sensor 18 that detects an engine rotation speed, are connected to the ECU 10 via electric wires in addition to the sensors described above, and output signals from the various sensors are input into the ECU 10.

Meanwhile, the throttle 6, the fuel injection valves 7, and the spark plugs 8 are connected to the ECU 10 via electric wires, whereby these devices are controlled by the ECU 10.

The ECU 10 stops supplying fuel to a part of the cylinders before stopping the internal combustion engine 1. In other words, the ECU 10 implements a fuel cut in this part of the cylinders. When a request to stop the internal combustion engine 1 is issued, the fuel cut is implemented in the part of the cylinders while continuing to supply fuel to the other cylinders such that combustion is performed therein. At this time, spark ignition is implemented in at least the other cylinders in which combustion is performed.

Note that the request to stop the internal combustion engine 1 corresponds to a situation in which the driver of the vehicle performs an operation to stop the internal combustion engine 1, a situation occurring in a hybrid vehicle, in which a drive source of the vehicle is switched from the internal combustion engine 1 to an electric motor, a situation in which the internal combustion engine 1 is stopped automatically regardless of the wishes of the driver when the vehicle stops, and so on, for example. A situation in which the driver of the vehicle performs an operation to stop the internal combustion engine 1 corresponds to a situation in which the driver of the vehicle switches an ignition switch OFF, for example. Further, a situation occurring in a hybrid vehicle, in which the drive source of the vehicle is switched from the internal combustion engine 1 to the electric motor, corresponds to a situation in which the internal combustion engine 1 is stopped and the vehicle is driven using the electric motor when a speed of the vehicle decreases to a predetermined speed, for example. Furthermore, a situation in which the internal combustion engine 1 is stopped automatically regardless of the wishes of the driver when the vehicle stops corresponds to a situation in which the internal combustion engine 1 is stopped automatically when the vehicle stops, for example. In this embodiment, the internal combustion engine 1 is not stopped as soon as the request to stop internal combustion engine 1 is issued.

The part of the cylinders in which the fuel cut is implemented may consist of one or more cylinders. Further, the number of cylinders in which the fuel cut is implemented may be determined such that the internal combustion engine 1 can be operated by the other cylinders that continue to receive a supply of fuel.

By implementing the fuel cut in the part of the cylinders and continuing to supply fuel to the other cylinders so that combustion is performed therein, torque for operating the internal combustion engine 1 is generated in the other cylinders that continue to receive a supply of fuel such that combustion is performed therein. Hence, the internal combustion engine 1 remains operative even when the fuel supply is stopped in the part of the cylinders, and as a result, a piston provided in each of the part of the cylinders continues to move. Since combustion is not performed in the part of the cylinders, air taken in by these cylinders is discharged as is. In other words, oxygen is discharged from the part of the cylinders. By supplying this oxygen to the filter 4, an oxygen concentration of the filter 4 can be increased, enabling regeneration of the filter 4.

At this time, no fuel is burned in the part of the cylinders, and therefore no NO_{X} is generated in the part of the cylinders. By implementing the fuel cut in the part of the cylinders, therefore, an amount of discharged NO_{X} can be reduced in comparison with a case where fuel is supplied to all of the cylinders. In other words, filter regeneration can be implemented while reducing the amount of discharged NO_{X}. Moreover, in the other cylinders to which fuel is supplied, an operation is performed either in the vicinity of the stoichiometric air-fuel ratio or at a lower air-fuel ratio (a richer air-fuel ratio) than the stoichiometric air-fuel ratio, and therefore the amount of NO_{X} generated thereby can be reduced. As a result, NO_{X} discharge can be suppressed even further.

By stopping the fuel supply to all of the cylinders of the internal combustion engine 1 after implementing the fuel cut in the part of the cylinders, regeneration of the filter 4 can be implemented before the internal combustion engine 1 is stopped. Note that when oxygen remains in the filter 4 even after the engine is stopped, regeneration of the filter 4 is continued. Hence, the fuel supply to all of the cylinders may be stopped before regeneration of the filter 4 is completed. Alternatively, the fuel supply to all of the cylinders may be stopped after regeneration of the filter 4 is completed. Moreover, the fuel supply to all of the cylinders may be stopped after the amount of PM collected in the filter 4 reaches the allowable range. The fuel supply to all of the cylinders may also be stopped following the elapse of a predetermined period after implementing the fuel cut in the part of the cylinders.

Fig. 2 is a flowchart showing a control flow of the internal combustion engine 1 according to this embodiment. This routine is executed by the ECU 10 at predetermined time intervals.

In step S101, a determination is made as to whether or not a request to stop the engine has been issued. A request to stop the engine is determined to have been issued when, for example, the driver switches the ignition key OFF. When the determination of step S101 is affirmative, the routine advances to step S102, and when the determination is negative, the routine is terminated.

In step S102, the fuel cut is implemented in the part of the cylinders while continuing to supply fuel to the other cylinders so that combustion is performed therein. As a result, the filter 4 is regenerated. Note that in this embodiment, step S102 corresponds to a partial cylinder stoppage step of the present invention.

In step S103, the internal combustion engine 1 is stopped. In other words, the fuel supply to all of the cylinders is stopped. Note that in this embodiment, step S103 corresponds to an all cylinder stoppage step of the present invention.

According to this embodiment, as described above, the fuel cut is implemented in the part of the cylinders while continuing to supply fuel to the other cylinders so that combustion is performed therein before stopping the engine. In so doing, oxygen can be supplied to the filter 4, and as a result, the filter 4 can be regenerated. Further, by implementing the fuel cut in the part of the cylinders, the amount of discharged NO_{X} can be reduced. Moreover, combustion is performed in the vicinity of the stoichiometric air-fuel ratio in the other cylinders that continue to receive a supply of fuel, and therefore the amount of discharged NO_{X} can be reduced even further.

### (Second Embodiment)

This embodiment differs from the first embodiment in the condition on which the fuel cut is implemented in the part of the cylinders before stopping the engine. All other apparatuses and so on are identical to the first embodiment, and therefore description thereof has been omitted.

Here, to oxidize the PM, the temperature of the filter 4 must be sufficiently high. In other words, even when oxygen is supplied to the filter 4, the filter 4 cannot easily be regenerated until the temperature of the filter 4 reaches a temperature at which the PM can be oxidized. In this embodiment, therefore, the fuel cut is implemented in the part of the cylinders only when the temperature of the filter 4 equals or exceeds a predetermined lower limit temperature.

The predetermined lower limit temperature is a lower limit value of the temperature at which PM is oxidized. Further, the predetermined lower limit temperature may be set at a value having a certain amount of leeway relative to the lower limit value of the temperature at which PM is oxidized. In other words, the predetermined lower limit temperature may be set higher than the lower limit value of the temperature at which PM is oxidized. Furthermore, the predetermined lower limit temperature may be varied in accordance with an amount of supplied oxygen, for example. The amount of supplied oxygen may be determined in accordance with the amount of PM collected in the filter 4. The predetermined lower limit temperature may be determined in advance by experiments, simulations, and so on, and stored in the ECU 10.

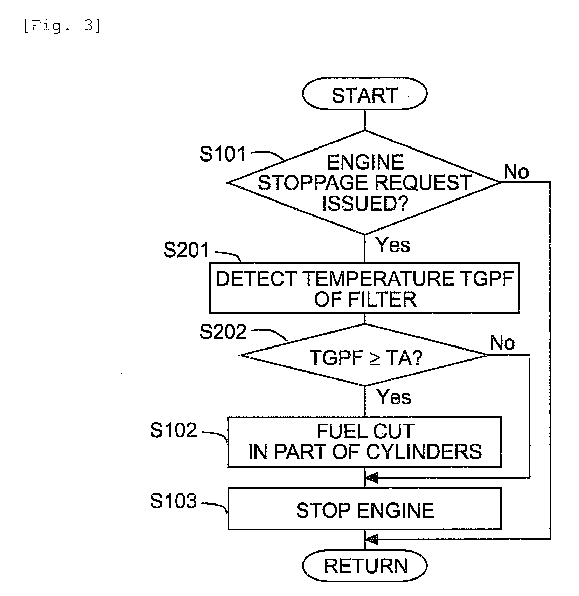

Fig. 3 is a flowchart showing a control flow of the internal combustion engine 1 according to this embodiment. This routine is executed by the ECU 10 at predetermined time intervals. Steps in which identical processing to the above embodiment is performed have been allocated identical step numbers, and description thereof has been omitted.

When, in this routine, the determination of step S101 is affirmative, the routine advances to step S201. In step S201, a temperature TGPF of the filter 4 is detected. The temperature TGPF of the filter 4 is detected by the second temperature sensor 12. Alternatively, the temperature TGPF of the filter 4 may be estimated on the basis of the operating conditions of the internal combustion engine 1.

In step S202, a determination is made as to whether or not the temperature TGPF of the filter 4 equals or exceeds a predetermined lower limit temperature TA. The predetermined lower limit temperature TA is determined in advance by experiments, simulations, and so on as the lower limit value of the temperature at which PM is oxidized, for example, and stored in the ECU 10.

When the determination of step S202 is affirmative, the routine advances to step S102, and when the determination is negative, the routine advances to step S103.

Hence, when the temperature of the filter 4 is lower than the predetermined lower limit temperature, the internal combustion engine 1 is stopped without implementing the fuel cut in the part of the cylinders. In so doing, a situation in which fuel continues to be supplied to the other cylinders even though regeneration of the filter 4 is not underway does not arise, and as a result, an amount of consumed fuel can be reduced. Further, when the temperature of the filter 4 equals or exceeds the predetermined lower limit temperature, the fuel cut is implemented in the part of the cylinders, and therefore oxygen is supplied to the filter 4 so that the filter 4 can be regenerated.

### (Third Embodiment)

This embodiment differs from the above embodiments in the condition on which the fuel cut is implemented in the part of the cylinders before stopping the engine. All other apparatuses and so on are identical to the first embodiment, and therefore description thereof has been omitted.

Here, when oxygen is supplied to the filter 4 while the temperature of the filter 4 is high, the filter 4 may overheat due to reaction heat generated during oxidation of the PM in the filter 4. When the filter 4 overheats, the filter 4 may break, for example, and in a case where a catalyst is carried on the filter 4, the catalyst may deteriorate.

In this embodiment, therefore, the fuel cut is implemented in the part of the cylinders only when the temperature of the filter 4 is equal to or lower than a predetermined upper limit temperature. Here, the predetermined upper limit temperature is a larger value than the predetermined lower limit temperature according to the second embodiment. Further, the predetermined upper limit temperature may be set at an upper limit value of a temperature at which the filter 4 does not overheat even when regeneration is implemented thereon, for example. Alternatively, the predetermined upper limit temperature may be set at or below a value obtained by subtracting a temperature increase occurring in the filter 4 during regeneration from a heat resistant temperature of the filter 4. Furthermore, the predetermined upper limit temperature may be set at a value having a certain amount of leeway relative to the temperature increase occurring in the filter 4 during regeneration. Moreover, the predetermined upper limit temperature may be varied in accordance with the amount of supplied oxygen, for example. The amount of supplied oxygen may be determined in accordance with the amount of PM collected in the filter 4 (referred to hereafter as the collected PM amount). The predetermined upper limit temperature may be determined in advance by experiments, simulations, and so on, and stored in the ECU 10.

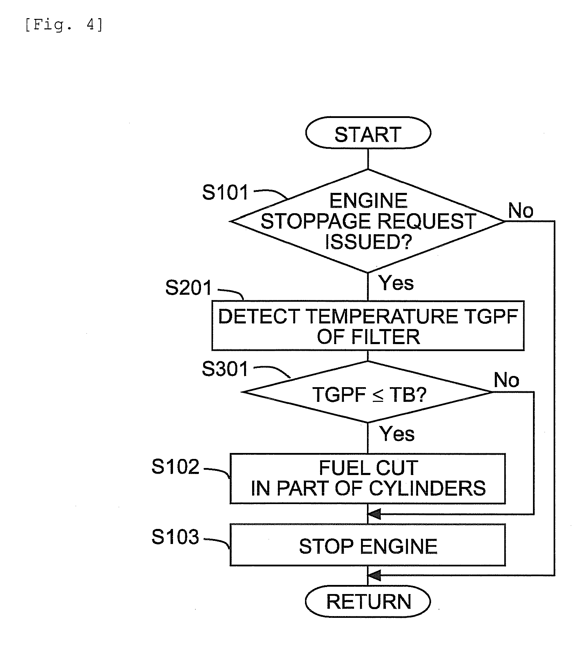

Fig. 4 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the processing of step S201 is complete, the routine advances to step S301. In step S301, a determination is made as to whether or not the temperature TGPF of the filter 4 is equal to or lower than a predetermined upper limit temperature TB. The predetermined upper limit temperature TB is determined in advance by experiments, simulations, and so on as the upper limit value of the temperature at which the filter 4 does not overheat even when regeneration is implemented thereon, for example, and is stored in the ECU 10. Note that in this step, a determination may be made as to whether or not the temperature of the filter 4 is equal to or higher than the predetermined lower limit temperature TA according to the second embodiment and equal to or lower than the predetermined upper limit temperature TB according to this embodiment.

When the determination of step S301 is affirmative, the routine advances to step S102, and when the determination is negative, the routine advances to step S103.

Hence, when the temperature of the filter 4 is higher than the predetermined upper limit temperature, the internal combustion engine 1 is stopped without implementing the fuel cut in the part of the cylinders. In so doing, breakage of the filter 4 and deterioration of the catalyst can be suppressed. Further, when the temperature of the filter 4 is equal to or lower than the predetermined upper limit temperature, the fuel cut is implemented in the part of the cylinders, and therefore oxygen is supplied to the filter 4 so that the filter 4 can be regenerated.

### (Fourth Embodiment)

This embodiment differs from the above embodiments in the condition on which the fuel cut is implemented in the part of the cylinders before stopping the engine. All other apparatuses and so on are identical to the first embodiment, and therefore description thereof has been omitted.

Here, when the amount of PM collected in the filter 4 is small, a blockage is unlikely to occur in the filter 4, and it may therefore be unnecessary to oxidize the PM. When the fuel cut is implemented in the part of the cylinders likewise in this case, the amount of consumed fuel may increase.

In this embodiment, therefore, the fuel cut is implemented in the part of the cylinders only when the amount of PM collected in the filter 4 equals or exceeds a predetermined lower limit amount. The predetermined lower limit amount may be set at a lower limit value of the collected PM amount at which regeneration of the filter becomes necessary. Further, the predetermined lower limit amount may be determined in advance by experiments, simulations, and so on as a value at which an increase in the amount of consumed fuel can be suppressed, and stored in the ECU 10.

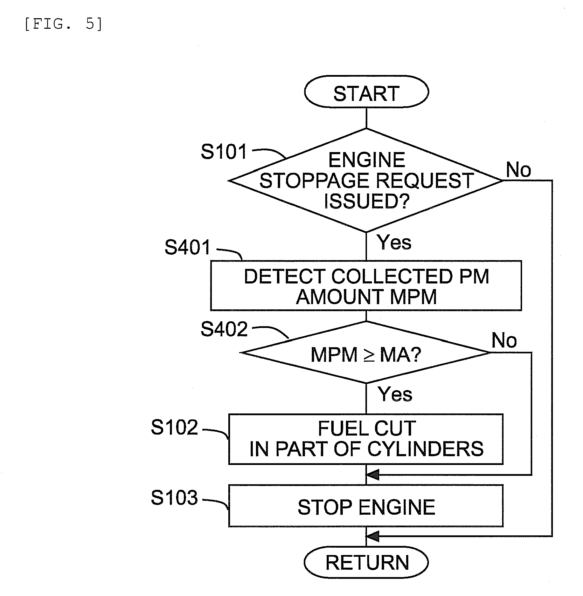

Fig. 5 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the determination of step S101 is affirmative, the routine advances to step S401. In step S401, the amount of PM collected in the filter 4 (a collected PM amount MPM) is detected. The collected PM amount MPM can be detected on the basis of a differential pressure between an upstream side and a downstream side of the filter 4, for example. Alternatively, the collected PM amount MPM may be estimated on the basis of the operating conditions of the internal combustion engine 1. Further, the collected PM amount MPM may be estimated in simplified form on the basis of a travel distance of the vehicle and an operation time of the internal combustion engine 1.

In step S402, a determination is made as to whether or not the collected PM amount MPM equals or exceeds a predetermined lower limit amount MA. The predetermined lower limit amount MA is determined in advance by experiments, simulations, and so on as a value at which the amount of consumed fuel can be reduced while preventing blockage of the filter 4, for example, and is stored in the ECU 10.

When the determination of step S402 is affirmative, the routine advances to step S102, and when the determination is negative, the routine advances to step S103.

Hence, when the amount of PM collected in the filter 4 is smaller than the predetermined lower limit amount, the internal combustion engine 1 is stopped without implementing the fuel cut in the part of the cylinders. In so doing, a situation in which fuel continues to be supplied to the other cylinders even though the amount of PM collected in the filter 4 is small does not arise, and therefore the amount of consumed fuel can be reduced. Further, when the amount of PM collected in the filter 4 equals or exceeds the predetermined lower limit amount, the fuel cut is implemented in the part of the cylinders, and therefore oxygen is supplied to the filter 4 so that the filter 4 can be regenerated.

### (Fifth Embodiment)

This embodiment differs from the above embodiments in the condition on which the fuel cut is implemented in the part of the cylinders before stopping the engine. All other apparatuses and so on are identical to the first embodiment, and therefore description thereof has been omitted.

Here, when oxygen is supplied in a condition where the amount of PM collected in the filter 4 is large, the filter 4 may overheat due to reaction heat generated during oxidation of the PM in the filter 4.

In this embodiment, therefore, the fuel cut is implemented in the part of the cylinders only when the amount of PM collected in the filter 4 is equal to or smaller than a predetermined upper limit amount. Here, the predetermined upper limit amount may be a larger value than the predetermined lower limit amount according to the fourth embodiment. Further, the predetermined upper limit amount may be set at an upper limit value of an amount of PM at which the filter 4 does not overheat even when regeneration is implemented thereon, for example. Alternatively, the predetermined upper limit amount may be set at or below a value obtained by subtracting the temperature increase occurring in the filter 4 during regeneration from the heat resistant temperature of the filter 4. Furthermore, the predetermined upper limit amount may be set at a value having a certain amount of leeway relative to the temperature increase occurring in the filter 4 during regeneration. Moreover, the predetermined upper limit amount may be varied in accordance with the amount of supplied oxygen, for example. The predetermined upper limit amount may be determined in advance by experiments, simulations, and so on, and stored in the ECU 10.

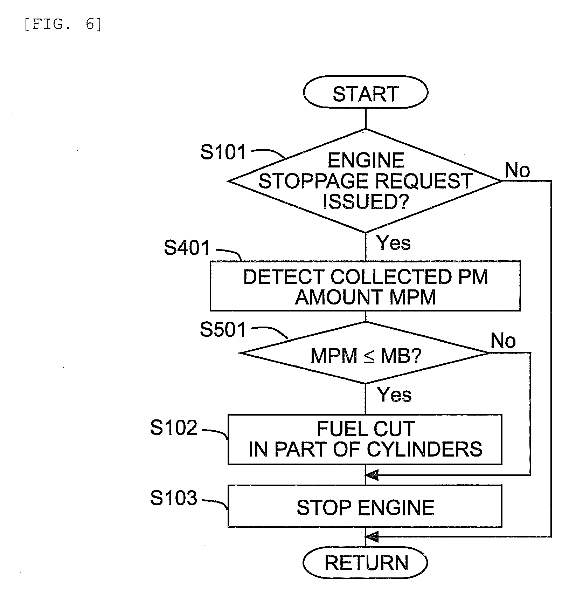

Fig. 6 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the processing of step S401 is complete, the routine advances to step S501. In step S501, a determination is made as to whether or not the collected PM amount MPM is equal to or smaller than a predetermined upper limit amount MB. The predetermined upper limit amount MB is determined in advance by experiments, simulations, and so on as the upper limit value of the collected PM amount at which the filter 4 does not overheat even when regeneration is implemented thereon, for example, and is stored in the ECU 10. Note that in this step, a determination may be made as to whether or not the collected PM amount MPM is equal to or larger than the predetermined lower limit amount MA according to the fourth embodiment and equal to or smaller than the predetermined upper limit amount MB according to this embodiment.

When the determination of step S501 is affirmative, the routine advances to step S102, and when the determination is negative, the routine advances to step S103.

Hence, when the amount of PM collected in the filter 4 is larger than the predetermined upper limit amount, the internal combustion engine 1 is stopped without implementing the fuel cut in the part of the cylinders. In so doing, breakage of the filter 4 and deterioration of the catalyst can be suppressed. Further, when the amount of PM collected in the filter 4 is equal to or smaller than the predetermined upper limit amount, the fuel cut is implemented in the part of the cylinders, and therefore oxygen is supplied to the filter 4 so that the filter 4 can be regenerated.

### (Sixth Embodiment)

In this embodiment, a combination of the second to fourth embodiments will be described. All other apparatuses and so on are identical to the first embodiment, and therefore description thereof has been omitted.

By employing the second and third embodiments, the temperature range in which to implement the fuel cut in the part of the cylinders is determined. Further, by employing the fourth and fifth embodiments, the collected PM amount range in which to implement the fuel cut in the part of the cylinders is determined. By combining these embodiments, the fuel cut can be implemented in the part of the cylinders in accordance with both the temperature of the filter 4 and the collected PM amount.

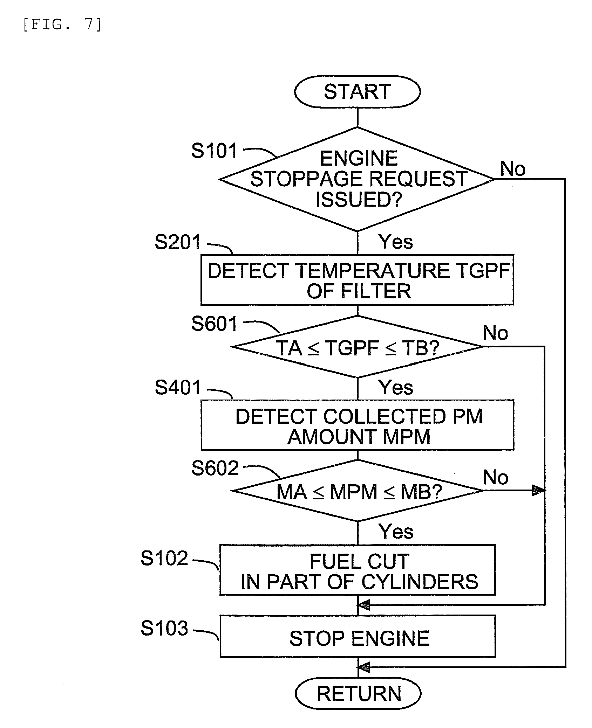

Fig. 7 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the temperature TGPF of the filter 4 is detected in step S201, the routine advances to step S601. In step S601, a determination is made as to whether or not the temperature TGPF of the filter 4 is equal to or higher than the predetermined lower limit temperature TA according to the second embodiment and equal to or lower than the predetermined upper limit temperature TB according to the third embodiment. When the determination of step S601 is affirmative, the routine advances to step S401, and when the determination is negative, the routine advances to step S103.

Next, when the collected PM amount MPM is detected in step S401, the routine advances to step S602. In step S602, a determination is made as to whether or not the collected PM amount MPM is equal to or larger than the predetermined lower limit amount MA according to the fourth embodiment and equal to or smaller than the predetermined upper limit amount MB according to the fifth embodiment. When the determination of step S602 is affirmative, the routine advances to step S102, and when the determination is negative, the routine advances to step S103.

In so doing, implementation of the fuel cut in the part of the cylinders can be limited to a case in which both the temperature of the filter 4 and the collected PM amount are within their respective predetermined ranges. Accordingly, a situation in which fuel continues to be supplied to the other cylinders even when regeneration of the filter 4 is difficult or unnecessary does not arise, and as a result, the amount of consumed fuel can be reduced. Moreover, breakage of the filter 4 and deterioration of the catalyst can be suppressed. Note that the processing of steps S401 and S602 may be performed before the processing of steps S201 and S601.

### (Seventh Embodiment)

This embodiment differs from the above embodiments in the condition on which the fuel cut is implemented in the part of the cylinders before stopping the engine. All other apparatuses and so on are identical to the first embodiment, and therefore description thereof has been omitted.

Here, oxygen must be supplied to the filter 4 in order to oxidize the PM. When the internal combustion engine 1 is operative, meanwhile, a fuel cut is implemented during deceleration and so on, as a result of which oxygen is supplied to the filter 4. Furthermore, the internal combustion engine 1 may be operated at a higher air-fuel ratio (a leaner air-fuel ratio) than the stoichiometric air-fuel ratio, and oxygen is supplied to the filter 4 likewise in this case. When oxygen is supplied to the filter 4 in this manner, the filter 4 is regenerated. When a request to stop the internal combustion engine 1 is issued after the filter 4 has been regenerated, it may be unnecessary to regenerate the filter 4. In other words, it may be unnecessary to implement the fuel cut in the part of the cylinders.

Hence, in this embodiment, the fuel supply is stopped in the part of the cylinders only when a request to stop the internal combustion engine 1 is issued following the elapse of a predetermined operation time from a point at which gas having a higher air-fuel ratio than the stoichiometric air-fuel ratio was most recently discharged from the internal combustion engine 1.

Here, the predetermined operation time is a time extending from a point at which oxygen is supplied to the filter 4 to a point at which the collected PM amount reaches the amount at which regeneration of the filter 4 becomes necessary. The predetermined operation time may also be set at a value having a certain amount of leeway. Further, the predetermined operation time may be determined in advance by experiments, simulations, and so on, and stored in the ECU 10.

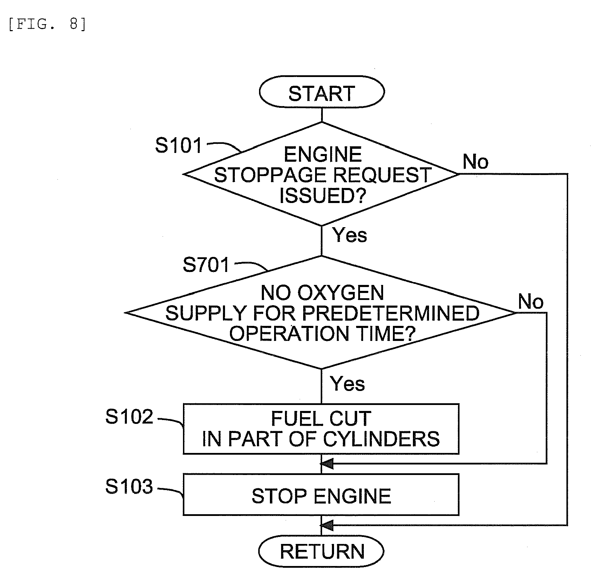

Fig. 8 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the determination of step S101 is affirmative, the routine advances to step S701. In step S701, a determination is made as to whether or not the predetermined operation time has elapsed following a point at which gas containing a large amount of oxygen was most recently discharged from the internal combustion engine 1. In this step, a determination is made as to whether or not a request to stop the internal combustion engine 1 has been issued following the elapse of the predetermined operation time from the point at which gas containing a large amount of oxygen was most recently discharged from the internal combustion engine 1. When the determination of step S701 is affirmative, the routine advances to step S102, and when the determination is negative, the routine advances to step S103.

In so doing, the operation to implement the fuel cut in the part of the cylinders while continuing to supply fuel to the other cylinders can be prevented from being performed more than necessary, and as a result, the amount of consumed fuel can be reduced. Further, when oxygen has not been supplied to the filter 4, the fuel cut is implemented in the part of the cylinders, and therefore oxygen is supplied to the filter 4 so that the filter 4 can be regenerated.

### (Eighth Embodiment)

In this embodiment, when the fuel cut is implemented in the part of the cylinders before stopping the engine, the number of cylinders in which the fuel cut is implemented is varied on the basis of at least one of the temperature of the filter 4 and the collected PM amount. All other apparatuses and so on are identical to the first embodiment, and therefore description thereof has been omitted.

Here, when the fuel cut is implemented in the part of the cylinders, the amount of oxygen supplied to the filter 4 increases steadily as the number of cylinders in which the fuel cut is implemented increases. Further, when the collected PM amount is comparatively small, the amount of oxygen required to oxidize the PM decreases correspondingly. When the collected PM amount is comparatively large, on the other hand, the amount of oxygen required to oxidize the PM increases correspondingly. Furthermore, when the temperature of the filter 4 is comparatively low, the amount of leeway remaining until the filter 4 overheats is large, but when the temperature of the filter 4 is comparatively high, the amount of leeway remaining until the filter 4 overheats is small.

Hence, in this embodiment, at least one of an operation to increase the number of cylinders in which the fuel cut is implemented so that the amount of supplied oxygen increases steadily as the collected PM amount increases and an operation to increase the number of cylinders in which the fuel cut is implemented so that the amount of supplied oxygen increases steadily as the temperature of the filter 4 decreases is performed. Note that the temperature of the filter 4 is assumed to equal or exceed the aforesaid predetermined lower limit temperature.

For example, the number of cylinders in which the fuel cut is implemented may be determined in accordance with the temperature of the filter 4. Similarly, the number of cylinders in which the fuel cut is implemented may be determined in accordance with the collected PM amount. Further, the number of cylinders in which the fuel cut is to be implemented may be determined in accordance with the temperature of the filter 4 and then corrected in accordance with the collected PM amount. Similarly, the number of cylinders in which the fuel cut is to be implemented may be determined in accordance with the collected PM amount and then corrected in accordance with the temperature of the filter 4. Furthermore, relationships between the collected PM amount, the temperature of the filter 4, and the number of cylinders in which the fuel cut is to be implemented may be stored in the ECU 10 in the form of a map. These relationships may be determined in advance by experiments, simulations, and so on.

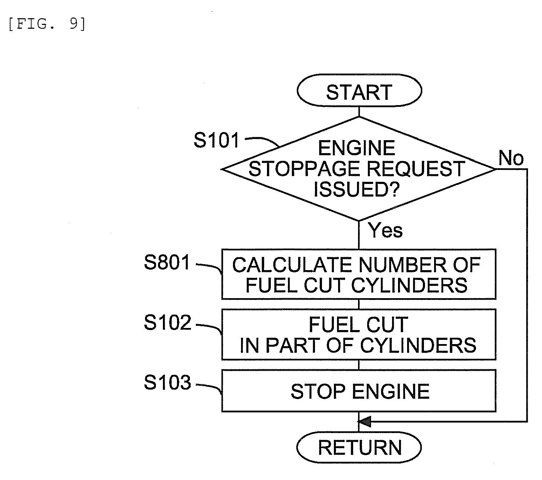

Fig. 9 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the determination of step S101 is affirmative, the routine advances to step S801. In step S801, the number of cylinders in which the fuel cut is to be implemented is calculated. The ECU 10 calculates the number of cylinders in which the fuel cut is to be implemented using a map based on at least one of the temperature of the filter 4 and the collected PM amount.

As a result, an appropriate amount of oxygen can be supplied to the filter 4 during regeneration of the filter 4.

### (Ninth Embodiment)

In this embodiment, in a case where the fuel cut is implemented in the part of the cylinders before stopping the engine, the fuel cut is implemented in a plurality of cylinders arranged consecutively in a firing order when the temperature of the filter 4 is equal to or lower than a predetermined temperature. All other apparatuses and so on are identical to the first embodiment, and therefore description thereof has been omitted.

Here, when the fuel cut is implemented in the part of the cylinders, post-combustion gas is supplied to the filter 4 from the other cylinders that receive a supply of fuel, while oxygen is supplied to the filter 4 from the cylinders in which the fuel cut is implemented. Accordingly, post-combustion gas and oxygen are supplied respectively to the filter 4 in sequence from the cylinders that receive a supply of fuel and the cylinders in which the fuel cut is implemented.

Regeneration of the filter 4 is activated when oxygen is supplied to the filter 4 from the cylinders in which the fuel cut is implemented. Further, the generation of reaction heat is suppressed when the post-combustion gas is supplied to the filter 4. Therefore, oxidation of the PM is promoted when oxygen is supplied to the filter 4 continuously. When oxygen is supplied to the filter 4 intermittently, on the other hand, oxidation of the PM slows.

Here, when oxygen is supplied in a condition where the temperature of the filter 4 is high, the filter 4 may overheat due to reaction heat generated during oxidation of the PM in the filter 4.

Hence, in this embodiment, when the fuel cut is implemented in the part of the cylinders while the temperature of the filter 4 is equal to or lower than a predetermined temperature, the cylinders in which the fuel cut is to be implemented are determined such that the fuel cut is implemented in a plurality of cylinders arranged consecutively in the firing order. Here, the predetermined temperature may be set at an upper limit value of a temperature at which the filter 4 does not overheat even when the fuel supply is stopped in a plurality of cylinders arranged consecutively in the firing order. Alternatively, the predetermined temperature may be set at or below a value obtained by subtracting the temperature increase that occurs in the filter 4 during regeneration from the heat resistant temperature of the filter 4. Furthermore, the predetermined temperature may be set at a value having a certain amount of leeway relative to the temperature increase occurring in the filter 4 during regeneration. The predetermined temperature may be determined in advance by experiments, simulations, and so on, and stored in the ECU 10. When the fuel cut is implemented in a plurality of cylinders arranged consecutively in the firing order in this manner, oxidation of the PM is promoted, and as a result, regeneration of the filter 4 is completed early.

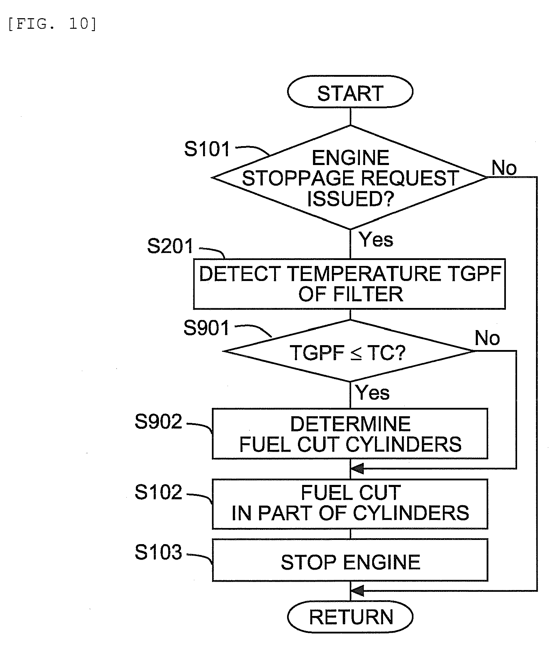

Fig. 10 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the temperature TGPF of the filter 4 is detected in step S201, the routine advances to step S901. In step S901, a determination is made as to whether or not the temperature TGPF of the filter 4 is equal to or lower than a predetermined temperature TC. The predetermined temperature TC is determined in advance by experiments, simulations, and so on as an upper limit value of the temperature at which the filter 4 does not overheat even when the fuel supply is stopped in a plurality of cylinders arranged consecutively in the firing order, for example, and is stored in the ECU 10. When the determination of step S901 is affirmative, the routine advances to step S902, and when the determination is negative, the routine advances to step S102.

In step S902, the cylinders in which the fuel cut is to be implemented are determined. At this time, the fuel cut is implemented in a plurality of cylinders. Moreover, the cylinders in which the fuel cut is to be implemented are determined such that the fuel supply is stopped in a plurality of cylinders arranged consecutively in the firing order. The cylinders that are selected at this time may be determined in advance by experiments, simulations, and so on. Note that the fuel cut may be implemented in three or more consecutive cylinders. For example, the number of consecutive cylinders in which the fuel cut is implemented may be increased steadily as the temperature of the filter 4 decreases, thereby increasing the amount of leeway remaining until the filter 4 overheats.

According to this embodiment, as described above, when the temperature of the filter 4 is low, the fuel supply is stopped in a plurality of cylinders arranged consecutively in the firing order, and as a result, regeneration of the filter 4 can be promoted. Moreover, overheating of the filter 4 can be suppressed.

### (Tenth Embodiment)

In this embodiment, in a case where the fuel cut is implemented in the part of the cylinders before stopping the engine, the fuel cut is implemented in a plurality of cylinders arranged non-consecutively in the firing order when the temperature of the filter 4 equals or exceeds a predetermined temperature. All other apparatuses and so on are identical to the first embodiment, and therefore description thereof has been omitted.

As described in the ninth embodiment, when oxygen is supplied continuously to the filter 4, oxidation of the PM is promoted, but when oxygen is supplied to the filter 4 intermittently, oxidation of the PM slows.

Here, when oxygen is supplied in a condition where the temperature of the filter 4 is high, the filter 4 may overheat due to reaction heat generated during oxidation of the PM in the filter 4.

Hence, in this embodiment, when the fuel cut is implemented in the part of the cylinders while the temperature of the filter 4 equals or exceeds a predetermined temperature, the cylinders in which the fuel cut is to be implemented are determined such that the fuel cut is implemented in a plurality of cylinders arranged non-consecutively in the firing order. Here, the predetermined temperature may be set at a lower limit value of a temperature at which the filter 4 overheats when the fuel supply is stopped in a plurality of cylinders arranged consecutively in the firing order. Alternatively, the predetermined temperature may be set at or below a value obtained by subtracting the temperature increase that occurs in the filter 4 during regeneration from the heat resistant temperature of the filter 4. Furthermore, the predetermined temperature may be set at a value having a certain amount of leeway relative to the temperature increase occurring in the filter 4 during regeneration. Note that the predetermined temperature according to this embodiment may take an identical value to the predetermined temperature according to the ninth embodiment. Further, the predetermined temperature may be determined in advance by experiments, simulations, and so on, and stored in the ECU 10. When the fuel cut is implemented in cylinders arranged non-consecutively in the firing order in this manner, oxidation of the PM slows, and as a result, overheating of the filter 4 can be suppressed.

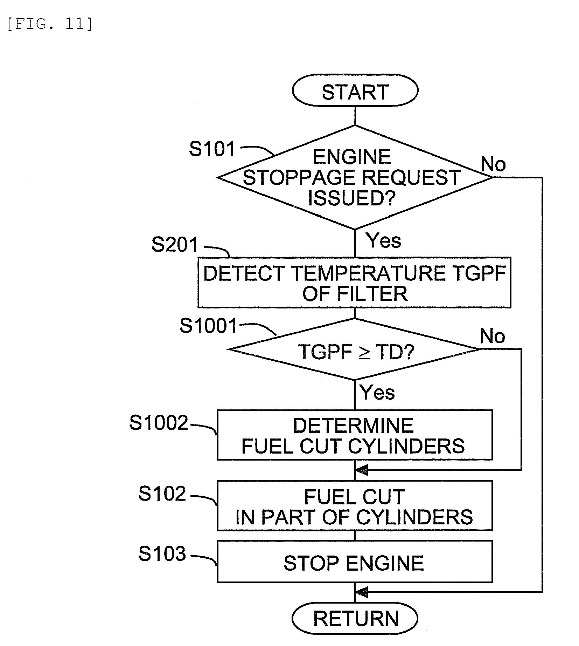

Fig. 11 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the temperature TGPF of the filter 4 is detected in step S201, the routine advances to step S1001. In step S1001, a determination is made as to whether or not the temperature TGPF of the filter 4 equals or exceeds a predetermined temperature TD. The predetermined temperature TD is determined in advance by experiments, simulations, and so on as a lower limit value of the temperature at which the filter 4 overheats when the fuel supply is stopped in a plurality of cylinders arranged consecutively in the firing order, for example, and is stored in the ECU 10. When the determination of step S1001 is affirmative, the routine advances to step S1002, and when the determination is negative, the routine advances to step S102.

In step S1002, the cylinders in which the fuel cut is to be implemented are determined. At this time, the fuel cut is implemented in a plurality of cylinders. Moreover, the cylinders in which the fuel cut is to be implemented are determined such that the fuel supply is stopped in a plurality of cylinders arranged non-consecutively in the firing order. The cylinders that are selected at this time may be determined in advance by experiments, simulations, and so on. Further, a plurality of cylinders in which the fuel cut is not implemented may be arranged consecutively in the firing order. For example, the amount of leeway remaining until the filter 4 overheats decreases steadily as the temperature of the filter 4 increases, and therefore the number of consecutive cylinders in which the fuel cut is not implemented may be increased in response.

According to this embodiment, as described above, oxygen can be supplied to the filter 4 by implementing the fuel cut in the part of the cylinders before stopping the engine, and as a result, the filter 4 can be regenerated. Further, when the temperature of the filter 4 is high, overheating of the filter 4 can be suppressed by implementing the fuel cut in cylinders arranged non-consecutively in the firing order.

### (Eleventh Embodiment)

In this embodiment, in a case where the fuel cut is implemented in the part of the cylinders before stopping the engine, the fuel cut is implemented in a plurality of cylinders arranged consecutively in the firing order when the collected PM amount equals or exceeds a predetermined amount. All other apparatuses and so on are identical to the first embodiment, and therefore description thereof has been omitted.

As described in the ninth embodiment, when oxygen is supplied to the filter 4 continuously, oxidation of the PM is promoted, but when oxygen is supplied to the filter 4 intermittently, oxidation of the PM slows.

Here, when the collected PM amount is comparatively large, the amount of leeway remaining until the filter 4 becomes blocked is small, and it is therefore desirable to reduce the collected PM amount early.

Hence, in this embodiment, when the fuel cut is implemented in the part of the cylinders in a condition where the collected PM amount equals or exceeds a predetermined amount, the cylinders in which the fuel cut is to be implemented are determined such that the fuel supply is stopped in a plurality of cylinders arranged consecutively in the firing order. Here, the predetermined amount may be set at a collected PM amount at which it becomes desirable to regenerate the filter 4 early. Alternatively, the predetermined amount may be set at a lower limit value of a collected PM amount at which the filter 4 becomes blocked unless the fuel supply is stopped in a plurality of cylinders arranged consecutively in the firing order. Furthermore, the predetermined amount may be set at a value having a certain amount of leeway relative to the collected PM amount at which the filter 4 becomes blocked unless the fuel supply is stopped in a plurality of cylinders arranged consecutively in the firing order. The predetermined amount may also be set at a collected PM amount at which the collected PM amount exceeds the allowable range unless the fuel supply is stopped in a plurality of cylinders arranged consecutively in the firing order. The predetermined amount may be determined in advance by experiments, simulations, and so on, and stored in the ECU 10. When the fuel supply is stopped in a plurality of cylinders arranged consecutively in the firing order in this manner, oxidation of the PM is promoted, and as a result, the collected PM amount can be reduced early.

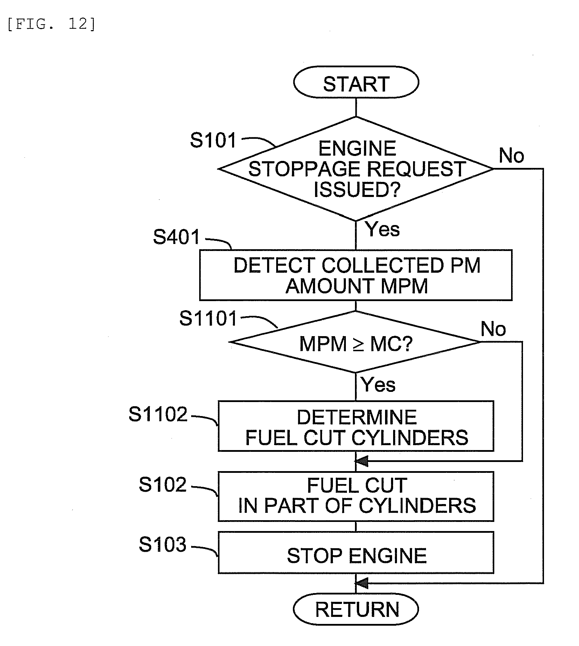

Fig. 12 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the collected PM amount MPM is detected in step S401, the routine advances to step S1101. In step S1101, a determination is made as to whether or not the collected PM amount MPM equals or exceeds a predetermined amount MC. The predetermined amount MC is determined in advance by experiments, simulations, and so on, and stored in the ECU 10. When the determination of step S1101 is affirmative, the routine advances to step S1102, and when the determination is negative, the routine advances to step S102.

In step S1102, the cylinders in which the fuel cut is to be implemented are determined. At this time, the fuel cut is implemented in a plurality of cylinders. Moreover, the cylinders in which the fuel cut is to be implemented are determined such that the fuel supply is stopped in a plurality of cylinders arranged consecutively in the firing order. The cylinders that are selected at this time may be determined in advance by experiments, simulations, and so on. Further, the fuel cut may be implemented in three or more consecutive cylinders. For example, the amount of leeway remaining until the filter 4 becomes blocked decreases steadily as the collected PM amount increases, and therefore the number of consecutive cylinders in which the fuel cut is implemented may be increased in response.

According to this embodiment, as described above, when the collected PM amount is large, the fuel supply is stopped in a plurality of cylinders arranged consecutively in the firing order, and as a result, regeneration of the filter 4 can be promoted. Moreover, overheating of the filter 4 can be suppressed.

### (Twelfth Embodiment)

In this embodiment, in a case where the fuel cut is implemented in the part of the cylinders before stopping the engine, the fuel cut is implemented in a plurality of cylinders arranged non-consecutively in the firing order when the collected PM amount is equal to or smaller than a predetermined amount. All other apparatuses and so on are identical to the first embodiment, and therefore description thereof has been omitted.

As described in the ninth embodiment, when oxygen is supplied to the filter 4 continuously, oxidation of the PM is promoted, but when oxygen is supplied to the filter 4 intermittently, oxidation of the PM slows.

Here, when the fuel cut is implemented in the part of the cylinders, a torque decrease occurs. Moreover, when the fuel cut is implemented in cylinders arranged consecutively in the firing order, a further torque decrease occurs, and when torque is generated in a cylinder into which fuel is injected thereafter, vibration may occur.

Hence, in this embodiment, when the fuel cut is implemented in the part of the cylinders in a condition where the collected PM amount is equal to or smaller than a predetermined amount, the cylinders in which the fuel cut is to be implemented are determined such that the fuel supply is stopped in a plurality of cylinders arranged non-consecutively in the firing order. Here, the predetermined amount may be set at a collected PM amount at which no problems arise even when the filter 4 is not regenerated early. Alternatively, the predetermined amount may be set at an upper limit value of a collected PM amount at which the filter 4 does not become blocked even when the fuel supply is stopped in a plurality of cylinders arranged non-consecutively in the firing order. Furthermore, the predetermined amount may be set at a value having a certain amount of leeway relative to the collected PM amount at which the filter 4 does not become blocked even when the fuel supply is stopped in a plurality of cylinders arranged non-consecutively in the firing order. The predetermined amount may also be set at a collected PM amount at which the amount of PM collected in the filter 4 does not exceed the allowable range even when the fuel supply is stopped in a plurality of cylinders arranged non-consecutively in the firing order. Note that the predetermined amount according to this embodiment may take an identical value to the predetermined amount according to the eleventh embodiment. The predetermined amount may be determined in advance by experiments, simulations, and so on, and stored in the ECU 10. When the cylinders in which the fuel cut is implemented are arranged non-consecutively in the firing order in this manner, torque variation and vibration can be suppressed.

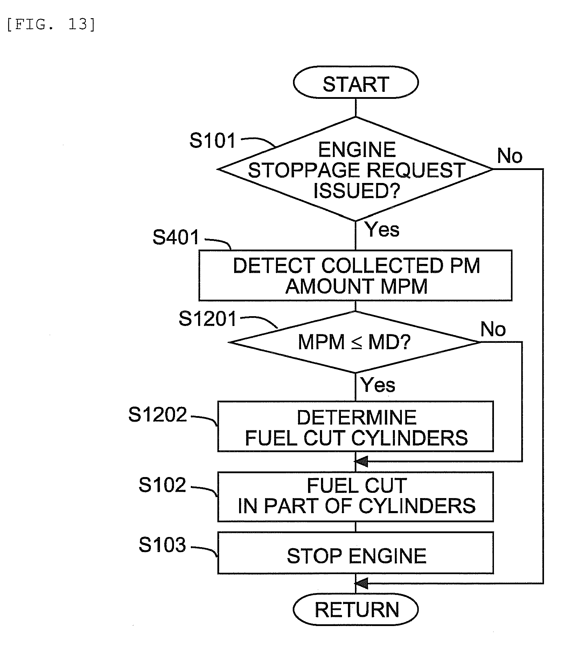

Fig. 13 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the collected PM amount MPM is detected in step S401, the routine advances to step S1201. In step S1201, a determination is made as to whether or not the collected PM amount MPM is equal to or smaller than a predetermined amount MD. The predetermined amount MD is determined in advance by experiments, simulations, and so on, and stored in the ECU 10. When the determination of step S1201 is affirmative, the routine advances to step S1202, and when the determination is negative, the routine advances to step S102.

In step S1202, the cylinders in which the fuel cut is to be implemented are determined. At this time, the fuel cut is implemented in a plurality of cylinders. Moreover, the cylinders in which the fuel cut is to be implemented are determined such that the fuel supply is stopped in a plurality of cylinders arranged non-consecutively in the firing order. The cylinders that are selected at this time may be determined in advance by experiments, simulations, and so on. Further, the plurality of cylinders in which the fuel cut is not implemented may be arranged consecutively in the firing order. For example, the amount of leeway remaining until the filter 4 becomes blocked increases steadily as the collected PM amount decreases, and therefore the number of consecutive cylinders in which the fuel cut is not implemented may be increased in response.

According to this embodiment, as described above, oxygen can be supplied to the filter 4 by implementing the fuel cut in the part of the cylinders before stopping the engine, and as a result, the filter 4 can be regenerated. Further, when the collected PM amount is small, the fuel cut is implemented in cylinders arranged non-consecutively in the firing order, and as a result, torque variation and vibration can be suppressed.

### (Thirteenth Embodiment)

In this embodiment, the fuel cut is implemented in the part of the cylinders continuously for a predetermined period following a point at which the air-fuel ratio of the exhaust gas flowing into the filter 4 reaches a higher air-fuel ratio (a leaner air-fuel ratio) than the stoichiometric air-fuel ratio, whereupon the internal combustion engine 1 is stopped. All other apparatuses and so on are identical to the first embodiment, and therefore description thereof has been omitted. Note that the catalyst 3 according to this embodiment is capable of storing oxygen. For example, the catalyst 3 is a three-way catalyst or a NO_{X} storage reduction catalyst. In this embodiment, the catalyst 3 corresponds to an exhaust gas purification catalyst of the present invention.

Here, when the fuel cut is implemented in the part of the cylinders such that oxygen is discharged from the internal combustion engine 1, but the catalyst 3 is capable of storing oxygen, the oxygen is stored by the catalyst 3. Accordingly, the oxygen concentration of the exhaust gas decreases in the catalyst 3, and as a result, substantially no oxygen is supplied to the filter 4 downstream thereof. When the oxygen stored in the catalyst 3 reaches a saturated condition, the oxygen flows out of the catalyst 3 downstream. Therefore, when the fuel cut is implemented in the part of the cylinders, it may take time for oxygen to be supplied to the filter 4.

Hence, in this embodiment, regeneration of the filter 4 is assumed to begin after oxygen flows out of the catalyst 3. Accordingly, the fuel cut is implemented in the part of the cylinders for a predetermined period following the point at which oxygen flows out of the catalyst 3. Note that oxygen flows out of the catalyst 3 when the air-fuel ratio detected by the air-fuel ratio sensor 13 is a lean air-fuel ratio. Here, the predetermined period is a period required to regenerate the filter 4. In other words, the predetermined period is a period required to supply enough oxygen to regenerate the filter 4 to the filter 4, and may be determined in advance by experiments, simulations, and so on. Note that in this embodiment, the air-fuel ratio sensor 13 corresponds to a detection apparatus of the present invention.

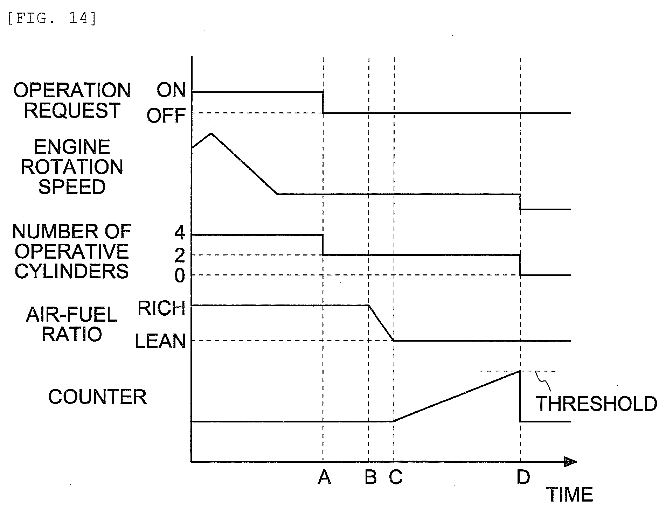

Fig. 14 is a time chart showing transitions of various values according to this embodiment. An "operation request" indicates whether or not a request to operate the internal combustion engine 1 has been issued. The "operation request" is ON when an operation request has been issued, and OFF when an operation request has not been issued. In other words, it may be said that when the "operation request" is OFF, a request to stop the internal combustion engine 1 has been issued. An "engine rotation speed" indicates a rotation speed of the internal combustion engine 1. A "number of operative cylinders" indicates the number of the other cylinders receiving the fuel supply. The air-fuel ratio indicates a detection value of the air-fuel ratio sensor 13. A "counter" indicates a cumulative value of an elapsed time following a point at which the oxygen stored in the catalyst 3 reaches a saturated condition.

In Fig. 14, A indicates a point at which the operation request switches from ON to OFF. The fuel cut is implemented in the part of the cylinders from the point indicated by A. When the internal combustion engine 1 has four cylinders, for example, the fuel cut is implemented in two cylinders. Further, B indicates the point at which oxygen starts to flow out of the catalyst 3, while C indicates the point at which the oxygen stored in the catalyst 3 reaches a saturated condition. The air-fuel ratio of the exhaust gas becomes lean from the point indicated by C, and therefore a value of the counter is increased. In other words, the counter indicates the cumulative value of the elapsed time following the point indicated by C. D indicates a point at which the counter reaches a threshold. The threshold is a counter value required to regenerate the filter 4. At the point D, the internal combustion engine 1 is stopped. In other words, a period extending from C to D corresponds to the predetermined period according to this embodiment.

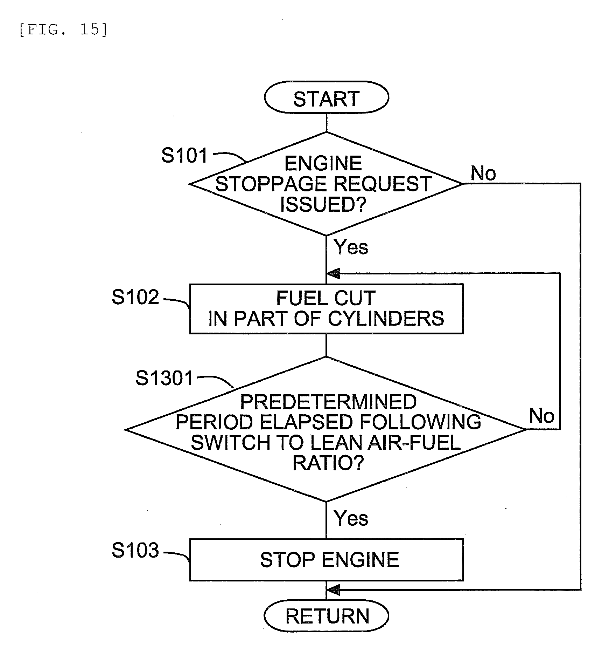

Fig. 15 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted.

When, in this routine, the fuel cut is implemented in the part of the cylinders in step S102, the routine advances to step S1301. In step S1301, a determination is made as to whether or not the predetermined period has elapsed following the point at which the detection value of the air-fuel ratio sensor 13 indicates a lean air-fuel ratio. The predetermined period is determined in advance by experiments, simulations, and so on as the period required to regenerate the filter 4, and stored in the ECU 10. When the determination of step S1301 is affirmative, the routine advances to step S103, and when the determination is negative, the routine returns to step S102. In other words, step S102 is performed repeatedly until the predetermined period elapses following the point at which the air-fuel ratio becomes lean.

According to this embodiment, as described above, oxygen can be supplied to the filter 4 reliably in the amount required to regenerate the filter 4, and therefore regeneration of the filter 4 can be completed more reliably. Further, the fuel cut is not implemented more than necessary on the part of the cylinders, and therefore the amount of consumed fuel can be reduced.

### (Fourteenth Embodiment)

In this embodiment, a combination of the first to thirteenth embodiments will be described. All other apparatuses and so on are identical to the first embodiment, and therefore description thereof has been omitted.

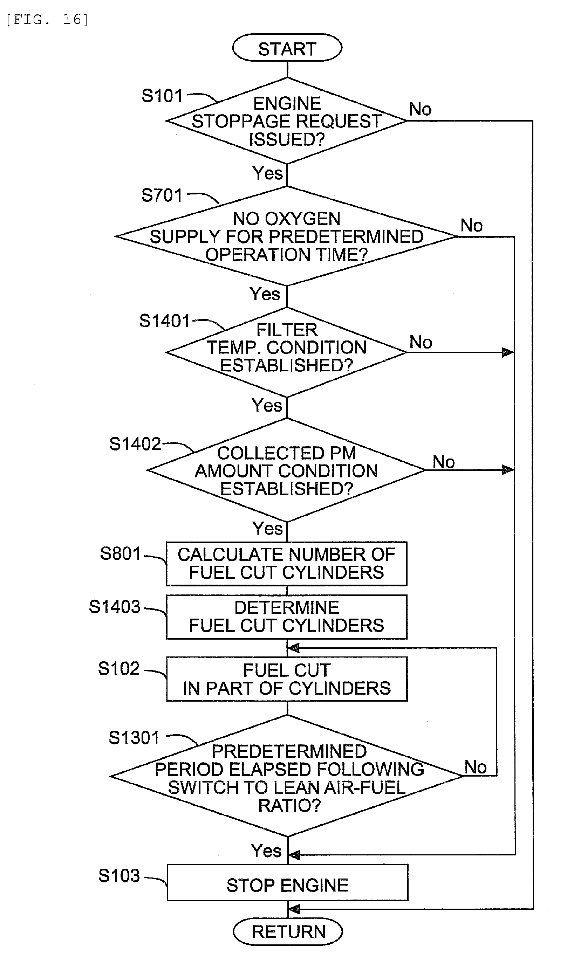

Here, the above embodiments can be employed in appropriate combinations. Fig. 16 is a flowchart showing a control flow of the internal combustion engine 1 according to this embodiment. This routine is executed by the ECU 10 at predetermined time intervals. Steps in which identical processing to the above embodiments is performed have been allocated identical step numbers, and description thereof has been omitted. Fig. 16 shows a combination of all of the first to thirteenth embodiments.

In step S1401, a determination is made as to whether or not a condition relating to the temperature of the filter 4 are established. In other words, a determination is made as to whether or not the temperature of the filter 4 satisfies a condition for implementing the fuel cut in the part of the cylinders. In this step, the processing described in at least one of the second embodiment and the third embodiment is performed. When the determination of step S1401 is affirmative, the routine advances to step S1402, and when the determination is negative, the routine advances to step S103.

In step S1402, a determination is made as to whether or not a condition relating to the collected PM amount are established. In other words, a determination is made as to whether or not the collected PM amount satisfies a condition for implementing the fuel cut in the part of the cylinders. In this step, the processing described in at least one of the fourth embodiment and the fifth embodiment is performed. When the determination of step S1402 is affirmative, the routine advances to step S801, and when the determination is negative, the routine advances to step S103.

Next, in step S1403, the cylinders in which the fuel cut is to be implemented are determined. At this time, a determination is made as to whether the fuel cut is to be implemented in cylinders arranged consecutively in the firing order or cylinders arranged non-consecutively in the firing order. In this step, the processing described in at least one of the ninth, tenth, eleventh, and twelfth embodiments is performed. Note that when both the temperature of the filter 4 and the collected PM amount are taken into account, a relationship between the temperature of the filter 4, the collected PM amount, and the cylinders in which the fuel cut is to be implemented may be determined in advance by experiments, simulations, and so on.

Note that in the routine shown in Fig. 16, only steps S101, S102, and S103 are essential, and all other steps may be omitted as required.

According to this embodiment, as described above, by combining the above embodiments, the filter can be regenerated more appropriately.

Note that in this embodiment and the first to thirteenth embodiments, two filters 4 may be provided in parallel. In this case, a first filter 4 is connected to the cylinders in which the fuel cut is implemented, and another filter 4 is connected to the cylinders that continue to receive a supply of fuel. In this case, torque for continuing to operate the internal combustion engine is generated in the cylinders that continue to receive a supply of fuel, while oxygen is supplied to the first filter 4 from the cylinders in which the fuel cut is implemented. As a result, filter regeneration is performed in the first filter 4. Note that the filter 4 connected to the cylinders in which the fuel cut is implemented may be switched between the first filter 4 and the other filter 4 every time a request to stop the internal combustion engine 1 is issued. Further, the cylinders in which the fuel cut is implemented and the cylinders that continue to receive a supply of fuel may be switched every time a request to stop the internal combustion engine 1 is issued. Furthermore, the fuel cut may be implemented in the cylinders connected to the filter 4 in which a larger amount of PM has been collected.

### [EXPLANATION OF REFERENCE NUMERALS AND CHARACTERS]

- 1: internal combustion engine
- 2: exhaust passage
- 3: catalyst
- 4: filter
- 5: intake passage
- 6: throttle
- 7: fuel injection valve
- 8: spark plug
- 10: ECU
- 11: first temperature sensor
- 12: second temperature sensor
- 13: air-fuel ratio sensor
- 14: air flow meter
- 16: accelerator pedal
- 17: accelerator opening sensor
- 18: crank position sensor

## Claims

1. A control method for an internal combustion engine having a plurality of cylinders and a filter provided in an exhaust passage of the internal combustion engine in order to collect particulate matter, the control method comprising:
a partial cylinder stoppage step of stopping a supply of fuel in a part of the cylinders while continuing to supply fuel to other cylinders such that combustion is performed therein, after a request to stop the internal combustion engine is issued but before the internal combustion engine is stopped; and
an all cylinder stoppage step of stopping the internal combustion engine by stopping the supply of fuel in all of the cylinders following the partial cylinder stoppage step.

2. The control method for an internal combustion engine according to claim 1, wherein in the other cylinders, combustion is performed in a vicinity of a stoichiometric air-fuel ratio.

3. The control method for an internal combustion engine according to claim 1 or 2, wherein the partial cylinder stoppage step is implemented when a temperature of the filter equals or exceeds a predetermined lower limit temperature.

4. The control method for an internal combustion engine according to any one of claims 1 to 3, wherein the partial cylinder stoppage step is implemented when a temperature of the filter is equal to or lower than a predetermined upper limit temperature.

5. The control method for an internal combustion engine according to any one of claims 1 to 4, wherein the partial cylinder stoppage step is implemented when an amount of particulate matter collected in the filter equals or exceeds a predetermined lower limit amount.

6. The control method for an internal combustion engine according to any one of claims 1 to 5, wherein the partial cylinder stoppage step is implemented when an amount of particulate matter collected in the filter is equal to or smaller than a predetermined upper limit amount.

7. The control method for an internal combustion engine according to any one of claims 1 to 6, wherein the partial cylinder stoppage step is implemented when the request to stop the internal combustion engine is issued following the elapse of a predetermined operation time from a point at which gas having a higher air-fuel ratio than a stoichiometric air-fuel ratio was most recently discharged from the internal combustion engine.

8. The control method for an internal combustion engine according to any one of claims 1 to 7, wherein in the partial cylinder stoppage step, the number of cylinders in which the supply of fuel is to be stopped is determined based on at least one of a temperature of the filter and an amount of particulate matter collected in the filter.

9. The control method for an internal combustion engine according to claim 8, wherein in the partial cylinder stoppage step, the number of cylinders in which the supply of fuel is to be stopped is increased as the temperature of the filter decreases.

10. The control method for an internal combustion engine according to claim 8 or 9, wherein in the partial cylinder stoppage step, the number of cylinders in which the supply of fuel is to be stopped is increased as the amount of particulate matter collected in the filter increases.

11. The control method for an internal combustion engine according to any one of claims 1 to 10, wherein in the partial cylinder stoppage step, the supply of fuel is stopped in a plurality of cylinders arranged consecutively in a firing order when a temperature of the filter is equal to or lower than a predetermined temperature.

12. The control method for an internal combustion engine according to any one of claims 1 to 10, wherein in the partial cylinder stoppage step, the supply of fuel is stopped in a plurality of cylinders arranged non-consecutively in a firing order when a temperature of the filter equals or exceeds a predetermined temperature.

13. The control method for an internal combustion engine according to any one of claims 1 to 10, wherein in the partial cylinder stoppage step, the supply of fuel is stopped in a plurality of cylinders arranged consecutively in a firing order when an amount of particulate matter collected in the filter equals or exceeds a predetermined amount.

14. The control method for an internal combustion engine according to any one of claims 1 to 10, wherein in the partial cylinder stoppage step, the supply of fuel is stopped in a plurality of cylinders arranged non-consecutively in a firing order when an amount of particulate matter collected in the filter is equal to or smaller than a predetermined amount.

15. The control method for an internal combustion engine according to any one of claims 1 to 14, wherein an exhaust gas purification catalyst that is capable of storing oxygen and is provided upstream of the filter, and a detection apparatus that detects an air-fuel ratio of exhaust gas downstream of the exhaust gas purification catalyst and upstream of the filter, are provided in the exhaust passage of the internal combustion engine, and
the partial cylinder stoppage step is continued until a predetermined period elapses following a point at which the air-fuel ratio of the exhaust gas, detected by the detection apparatus, increases beyond the stoichiometric air-fuel ratio.
